# FASCICULE DE BREVET EUROPEEN

(11) **EP 0 817 172 B1**
(45) Date de publication et mention de la délivrance du brevet: **02.05.2003**
(21) Numéro de dépôt: 97401601.6
(22) Date de dépôt: 04.07.1997
(51) Int. Cl.: G11B 5/31, G11B 5/49

(54) **Tête magnétique matricielle d'enregistrement/lecture et procédé de réalisation**
Matrix-Magnetkopf zur Aufzeichnung/Wiedergabe und Herstellungsverfahren
Magnetic matrix head for recording/reproducing and process for producing same

(30) Priorité: 05.07.1996 FR 9608393
(43) Date de publication de la demande: 07.01.1998
(73) Titulaire: Thales, 75008 Paris (FR)
(72) Inventeur: Maillot, Christian, 94117 Arcueil Cedex (FR); Dorel, Marc, 94117 Arcueil Cedex (FR)

(56) Documents cités:
- EP-A- 0 269 489
- EP-A- 0 616 316
- EP-A- 0 716 410
- WO-A-89/00327
- US-A- 3 839 784
- LAZZARI J P ET AL: "A NEW THIN FILM HEAD GENERATION IC HEAD" PROCEEDINGS OF THE INTERNATIONAL MAGNETICS CONFERENCE (INTERMAG), WASHINGTON, MAR. 28 - 31, 1989, no. -, 28 mars 1989, INSTITUTE OF ELECTRICAL AND ELECTRONICS ENGINEERS, page AA01 XP000067167
- PATENT ABSTRACTS OF JAPAN vol. 018, no. 539 (P-1812), 13 octobre 1994 & JP 06 187612 A (FUJITSU LTD), 8 juillet 1994,
- PATENT ABSTRACTS OF JAPAN vol. 017, no. 422 (P-1586), 5 août 1993 & JP 05 081615 A (SHARP CORP), 2 avril 1993,

## Description

L'invention concerne une tête magnétique matricielle d'enregistrement/lecture applicable notamment à l'enregistrement/lecture de bandes magnétiques multipistes.

Les brevets français n° FR-A-2 630 853 et FR-A-2 648 608 décrivent des têtes magnétiques matricielles d'enregistrement/lecture permettant de faire de l'enregistrement/lecture haute densité sur un support d'enregistrement. A titre d'exemple de telles têtes magnétiques sont capables d'enregistrer jusqu'à 1 024 pistes en parallèles sur une bande magnétique de 8 mm de large.

Ces têtes matricielles peuvent être réalisées par des technologies hybrides qui allient des étapes de sciage, bobinage, collage et dépôt de couches minces. Des modes de réalisation sont décrits par exemple dans le brevet français n° FR-A-2 648 940. Par ailleurs, ces têtes matricielles peuvent être réalisées par des technologies dites "intégrées" complètement couche mince. Dans ce cas, les conducteurs ne sont plus des fils bobinés mais des films conducteurs gravés. Un certain nombre de brevets décrivent ce type de réalisation.

Une contrainte importante liée à ce type de réalisation réside dans le coût de réalisation des têtes qui est pratiquement proportionnel à leur surface. Un objectif important est donc la réduction de la surface du composant.

Lorsqu'on a réalisé une tête d'écriture matricielle couche mince, deux alternatives apparaissent pour connecter cette tête à son électronique :
. connectique face avant : des fils sont soudés directement sur les conducteurs couche mince. Les sur-épaisseurs imposées par ces soudures ne permettent pas d'assurer un bon contact entre la bande et la tête à proximité des fils soudés. On est alors conduit à reporter ces soudures à l'extérieur de la bande (de part et d'autre). La hauteur totale de la tête est donc imposée par cette contrainte. Dans certaines configurations, ceci conduit à un sur-dimensionnement considérable de la tête réelle.
. connectique face arrière : pour éviter cet inconvénient, il est indispensable de connecter la tête d'écriture en face arrière en réalisant des passages conducteurs (via) dans le substrat.

La réalisation de via conducteurs dans des substrats de silicium ne sont pas aujourd'hui maîtrisés industriellement.

L'invention fournit une solution à ce problème.

L'invention concerne donc une tête magnétique d'enregistrement/lecture matricielle comportant :
- un substrat céramique non conducteur de l'électricité possédant une première et une deuxième faces principales munies chacune de plages de connexion correspondantes, les deux plages correspondantes des deux faces étant interconnectées deux à deux par des éléments de connexion internes au substrat;
- une couche de bonne perméabilité magnétique déposée sur la première face du substrat et portant une première série de conducteur de lignes et une deuxième série de conducteurs de colonnes croisant les conducteurs de ligne, chaque conducteur étant connecté à une plage de connexion de la première face ;
- des paires de pôles magnétiques localisées sensiblement au croisement d'un conducteur de ligne et d'un conducteur de colonne, les pôles d'une paire étant séparés par un espace d'entrefer et étant couplés magnétiquement à la couche de bonne perméabilité magnétique dans deux zones opposées définies par le croisement d'un conducteur de ligne et d'un conducteur de colonne.

Les différents objets et caractéristiques de l'invention apparaîtront plus clairement dans la description qui va suivre et dans les figures annexées qui représentent :
- la figure 1, un exemple de tête magnétique selon l'invention ;
- les figures 2a et 2b, un exemple de substrat de la tête magnétique ;
- les figures 3a à 3g, différentes vues d'un substrat applicable à l'invention.

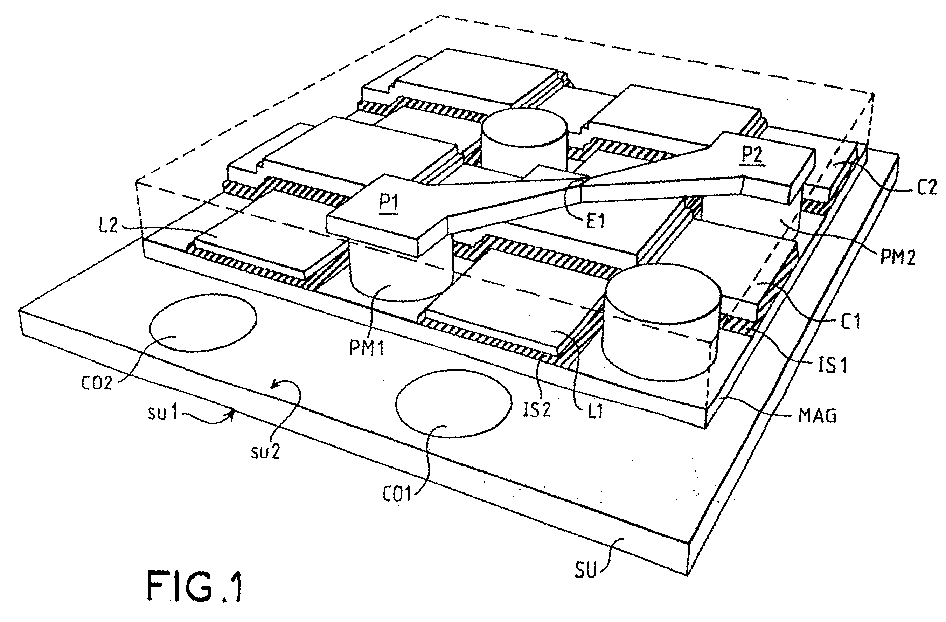

En se reportant à la figure 1, on va tout d'abord décrire un exemple de réalisation d'une tête magnétique selon l'invention.

Une plaque de substrat SU en matériau isolant est recouverte sur une face su2 d'une couche d'un matériau à bonne perméabilité magnétique MAG. Cette couche porte une première série de conducteurs L1, L2 (conducteurs de lignes) et une deuxième série de conducteurs C1, C2 (conducteurs de colonnes). Les conducteurs de ligne ne sont pas parallèles aux conducteurs de colonnes et en sont séparés par une couche d'isolant IS1.

Selon l'exemple de la figure 1, les conducteurs de lignes sont parallèles entre eux et les conducteurs de colonnes sont parallèles entre eux.

Si la couche MAG est conductrice, une couche d'isolant IS2 l'isole des conducteurs de lignes et de colonnes.

Les conducteurs de lignes et de colonnes forment des points de croisement. A chaque point de croisement est prévue une paire de pôles magnétiques P1, P2. Deux pôles P1, P2 sont séparés par un entrefer E1. Les deux pôles sont agencés de façon à être orientés sensiblement selon une ligne passant au-dessus du point de croisement. Les deux pôles sont couplés à la couche MAG en deux zones sensiblement symétriques par rapport au point de croisement. De préférence, les pôles P1, P2 sont en contact avec la couche MAG par l'intermédiaire de plots magnétiques PM1, PM2. Le circuit magnétique d'une tête magnétique élémentaire est ainsi constitué des deux pôles P1, P2 séparés par l'entrefer E1, des deux plots PM1, PM2 et de la couche MAG. Le passage d'un courant électrique dans l'un, l'autre ou les deux conducteurs de lignes et de colonnes induira donc la circulation de flux magnétiques dans le circuit magnétique. Selon le sens des courants dans les deux conducteurs, les flux induits s'additionneront ou se retrancheront.

Un support magnétique (non représenté) placé à proximité de l'entrefer sera donc influencé par ces flux et pourra enregistrer des informations magnétiques.

L'ensemble de la tête magnétique est noyé dans un matériau non magnétique et isolant électriquement.

Sur la figure 1, on n'a représenté qu'une tête élémentaire (P1-P2). Cependant, une tête matricielle peut comporter plusieurs dizaines de conducteurs de lignes et plusieurs dizaines de conducteurs de colonnes, et posséder une tête élémentaire à chaque point de croisement.

Les conducteurs de colonnes et les conducteurs de lignes sont connectés à des plages de connexion telles que C01, C02, situées sur la face su2 du substrat. Pour que cette connexion puisse se faire, la couche magnétique MAG ne recouvre pas ces plages de connexion, ou bien des trous sont prévus dans la couche MAG pour accéder à ces plages.

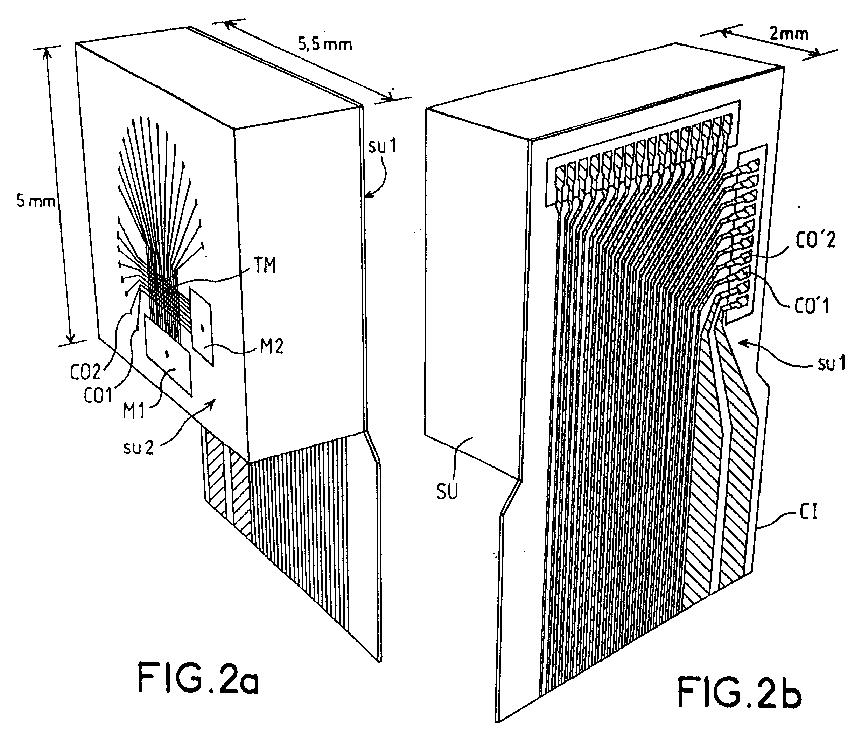

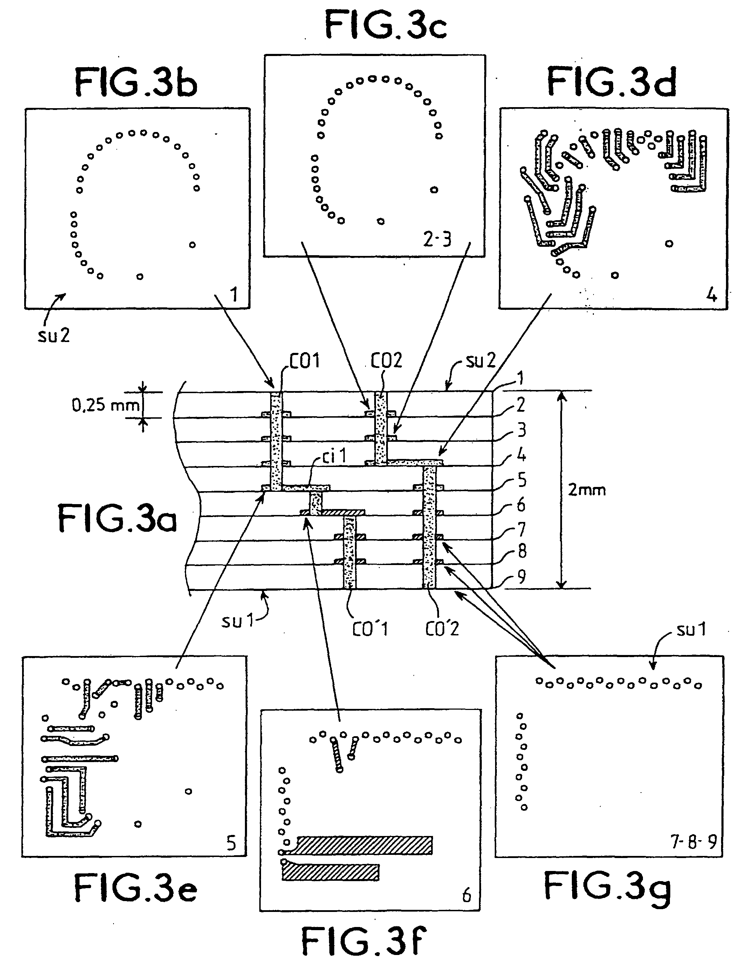

Les plages de connexion (C01, C02) sont interconnectées à travers le substrat SU à des plages de connexion situées sur la surface su1 du substrat. Le substrat SU se présente alors tel que cela est représenté sur les figures 2a et 2b.

Sur la figure 2a, on voit la face su2 du substrat. Dans la zone TM, on a représenté le réseau de conducteurs de lignes et de colonnes où est réalisé l'ensemble de têtes magnétiques. Chaque conducteur de lignes et de colonnes est raccordé à une plage de connexion telles que C01, C02. Les plages M1, M2 sont les connexions de masse communes respectivement aux conducteurs de lignes et aux conducteurs de colonnes.

La figure 2b représente le substrat vu du côté de la face su1. A cette face est connectée une plaque de circuits imprimés CI. A des plages de connexion de la face su1 correspondent, sur cette plaque, les plages de connexion telles que C0'1, C0'2. Ces plages de connexion sont connectées par des connexions internes aux plages de connexion de la face su2.

Les dispositions des plages de connexion sur les deux faces du substrat n'étant pas les mêmes, il est nécessaire de prévoir une distribution des connexions à l'intérieur du substrat.

Les figures 3a à 3g représentent un mode de réalisation d'un tel substrat.

La figure 3a représente le substrat en coupe et met en évidence que le substrat est un empilement de couches. Chaque couche est traversée par autant d'éléments de connexions qu'il y a de plages de connexion sur une face. Pour réorganiser la disposition des plages de connexion d'une face par rapport à la disposition des plages de connexion de l'autre face, entre les différentes couches, il est prévu des conducteurs internes, tels que cil, permettant de déplacer les plages de connexion.

Les figures 3b à 3g représentent respectivement la face su2 du substrat, les interfaces des différentes couches du substrat 2 à 8 et la face su1.

Selon un mode de réalisation préféré de l'invention, le substrat est en alumine. Chaque couche a une épaisseur d'environ 0,25 mm, ce qui conduit à un substrat d'épaisseur de quelques millimètres (2 mm par exemple).

Le procédé de réalisation comporte une première phase de réalisation du substrat par empilement de différentes couches d'alumine et réalisation, à chaque étape d'empilement, d'éléments de connexion traversant chaque couche et de conducteurs (ci1) permettant de déplacer les plages de connexion. Ce substrat étant réalisé avec sur sa face su1 des plages de connexion C0'1, C0'2 et sur sa face su2 des plages de connexion C01, C02, on réalise sur la face su2 l'ensemble de têtes magnétiques.

Cet ensemble de têtes magnétiques est implémenté de la manière suivante
- polissage du substrat (face su2) ;
- réalisation d'une base en matériau magnétique tel que le sendust, le permalloy ou un autre alliage connu pour sa forte perméabilité (couche MAG) ;
- gravure de cette base pour dégager les plages de connexion C01, C02 ;
- isolation électrique (par exemple Si02 ou Polyimide) (couche IS2);
- dépôt et gravure d'une rangée de conducteurs de lignes (L1, L2) (par exemple Aluminium, ou Or ou Cuivre) ;
- isolation de ces conducteurs (Si02 ou Polyimide) (couche IS1) ;
- dépôt et gravure d'une rangée de conducteurs de colonnes (C1, C2);
- isolation de ces conducteurs (couche IS1);
- planarisation ;
- gravure des couches d'isolant (IS1, IS2) jusqu'à la couche magnétique MAG ;
- remplissage des trous par un matériau magnétique à forte perméabilité magnétique ;
- planarisation ;
- réalisation des pôles (P1, P2) et entrefer (E1). Ces pôles sont réalisés par exemple selon la technique décrite dans le brevet français n° 2 605 783.

Le dessin des conducteurs doit prendre en compte les contraintes imposées par la réalisation des têtes magnétiques : pas réduit entre conducteurs (à 80 µm par exemple).

Cette implantation prend aussi en compte les contraintes imposées par la réalisation du substrat : typiquement 250 µm de pas entre les éléments de connexion traversant le substrat (de 100 µm de diamètre).

Selon une variante de réalisation, le substrat SU est réalisé en un matériau à bonne perméabilité magnétique en ferrite par exemple. Il n'y a donc pas lieu de prévoir la couche de bonne perméabilité magnétique MAG.

L'invention présente l'avantage de fournir une tête magnétique matricielle compacte, intégrée, rigide, aux connexions électriques fiables, et moins chère.

## Revendications

1. Tête magnétique d'enregistrement/lecture matricielle comportant
- un substrat céramique non conducteur de l'électricité possédant une première et une deuxième faces principales (su1, su2) munies chacune de plages de connexion correspondantes (CO1,CO'1), les deux plages correspondantes des deux faces étant interconnectées deux à deux par des éléments de connexion internes au substrat;
- une couche de bonne perméabilité magnétique (MAG) déposée sur la première face du substrat et portant une première série de conducteurs de lignes (L1) et une deuxième série de conducteurs de colonnes (C2) croisant les conducteurs de ligne, chaque conducteur étant connecté à une plage de connexion de la première face ;
- des paires de pôles magnétiques (P1, P2) localisées sensiblement au croisement d'un conducteur de ligne et d'un conducteur de colonne, les pôles d'une paire étant séparés par un espace d'entrefer et étant couplés magnétiquement à la couche de bonne perméabilité magnétique dans deux zones opposées définies par le croisement d'un conducteur de ligne et d'un conducteur de colonne.

2. Tête magnétique selon la revendication 1, **caractérisée en ce que** le substrat est en alumine.

3. Tête magnétique selon la revendication 1, **caractérisée en ce que** le substrat est en ferrite et tient lieu de couche de bonne perméabilité magnétique.

4. Tête magnétique selon la revendication 1, **caractérisée en ce que** le substrat comporte plusieurs couches de matériaux isolants électriquement, chaque couche possédant sur ses deux faces principales, des plages de connexions interconnectées par des éléments de connexion traversant la couche, des éléments conducteurs situés sur une face connectant en outre des éléments de connexion à des plages de connexion.

5. Procédé de réalisation d'une tête magnétique matricielle **caractérisé en ce qu'**il comporte les étapes suivantes :
- réalisation d'un substrat en matériau isolant possédant, sur une première face, des premières plages de connexion et, sur une deuxième face, des deuxièmes plages de connexion, les première et deuxième plages de connexion étant interconnectées à travers le substrat par des éléments de connexion internes ;
- réalisation sur la deuxième face du substrat successivement
• d'une couche d'un matériau de bonne perméabilité magnétique ;
• de rubans conducteurs constituant des conducteurs de lignes ;
• d'une couche d'isolant ;
• de rubans conducteurs constituant des conducteurs de colonnes non parallèles aux conducteurs de lignes ;
- perçage de trous à travers la couche d'isolant jusqu'à la couche de bonne perméabilité magnétique à des points de croisement d'un conducteur de ligne et d'un conducteur de colonne en des zones sensiblement symétriques du point de croisement ;
- réalisation de paires de pôles magnétiques, les pôles d'une paire étant séparés par un entrefer et étant réalisés sensiblement dans lesdites zones de façon à être couplés à la couche de matériau à bonne perméabilité magnétique.

## Patentansprüche

1. Matrixartiger Schreib/Lese-Magnetkopf,
- mit einem elektrisch nicht leitenden keramischen Substrat, das zwei Hauptseiten (su1, su2) mit je entsprechenden Anschlußbereichen (C01, C0'1), wobei die beiden entsprechenden Bereiche der beiden Seiten paarweise durch Verbindungselemente miteinander verbunden sind, die innerhalb des Substrats verlaufen,
- mit einer Schicht hoher magnetischer Permeabilität (MAG), die auf die erste Seite des Substrats aufgebracht ist und eine erste Schar von Zeilenleitern (L1, L2), sowie eine zweite Schar von die Zeilenleiter kreuzenden Spaltenleitern (C1, C2) trägt, wobei jeder Leiter an einen Anschlußbereich der ersten Seite geführt ist;
- mit Paaren von Magnetpolen (P1, P2), die im wesentlichen am Kreuzungspunkt eines Zeilenleiters und eines Spaltenleiters liegen, wobei die Pole eines Paars durch einen Magnetspalt voneinander getrennt und magnetisch an die Schicht hoher magnetischer Permeabiltät in zwei gegenüberliegenden Zonen gekoppelt sind, die das Überkreuzen zwischen einem Zeilen- und einem Spaltenleiter definiert sind.

2. Magnetkopf nach Anspruch 1, **dadurch gekennzeichnet, daß** das Substrat aus Aluminiumoxid ist.

3. Magnetkopf nach Anspruch 1, **dadurch gekennzeichnet, daß** das Substrat aus Ferrit ist und die Schicht hoher magnetischer Permeabilität bildet.

4. Magnetkopf nach Anspruch 1, **dadurch gekennzeichnet, daß** das Substrat mehrere Schichten aus elektrisch isolierenden Materialien aufweist, wobei jede Schicht auf ihren beiden Hauptflächen über die Schicht durchquerende Verbindungselemente miteinander verbundene Anschlußzonen besitzt und wobei leitende Elemente außerdem Verbindungselemente an Anschlußbereiche anschließen.

5. Verfahren zur Herstellung eines matrixartigen Magnetkopfs, **dadurch gekennzeichnet, daß** es die folgenden Schritte aufweist:
- ein Substrat aus isolierendem Material wird hergestellt, das an einer ersten Seite erste Anschlußbereiche und an einer zweiten Seite zweite Anschlußbereiche besitzt, wobei die ersten und zweiten Anschlußbereiche durch das Substrat hindurch mittels interner Verbindungselemente verbunden sind;
- auf der zweiten Seite des Substrats werden nacheinander gebildet:
• eine Schicht aus einem Material hoher magnetischer Permeabilität,
• leitende Bänder, die Zeilenleiter bilden,
• eine isolierende Schicht,
• leitende Bänder, die zu den Zeilenleitern nicht parallele Spaltenleiter bilden,
- Löcher werden durch die isolierende Schicht bis zur Schicht mit hoher magnetischer Permeabilität an Kreuzungspunkten eines Zeilenleiters und eines Spaltenleiters in Zonen angebracht, die im wesentlichen symmetrisch zum Kreuzungspunkt liegen,
- Paare von Magnetpolen werden gebildet, wobei die Pole eines Paares durch einen Magnetspalt voneinander getrennt sind und im wesentlichen in den genannten Zonen realisiert werden, sodaß sie an die Schicht aus einem Material hoher magnetischer Permeabilität gekoppelt werden.

## Claims

1. Matrix-type magnetic read/write head comprising:
- an electrically non-conducting ceramic substrate possessing a first main face and a second main face (su1, su2) each provided with corresponding connection pads (CO1, CO'1), the two corresponding pads of the two faces being interconnected in pairs via connection elements internal to the substrate;
- a layer (MAG) of good magnetic permeability deposited on the first face of the substrate and carrying a first series of conductors that form row conductors (L1) and a second series of conductors that form column conductors (C2) crossing the row conductors, each conductor being connected to a connection pad on the first face; and
- pairs of magnetic poles (P1, P2) located approximately at the intersection of a row conductor with a column conductor, the poles of one pair being separated by a gap space and being magnetically coupled to the layer of good magnetic permeability in two opposed regions defined by the intersection of a row conductor with a column conductor.

2. Magnetic head according to Claim 1, **characterized in that** the substrate is made of alumina.

3. Magnetic head according to Claim 1, **characterized in that** the substrate is made of a ferrite and takes the place of the layer of good magnetic permeability.

4. Magnetic head according to Claim 1, **characterized in that** the substrate includes several layers of electrically insulating materials, each layer possessing, on both its main faces, connection pads interconnected by connection elements passing through the layer, conducting elements located on one face furthermore connecting connection elements to connection pads.

5. Process for producing a matrix-type magnetic head, **characterized in that** it comprises the following steps:
- production of a substrate made of an insulating material possessing, on a first face, first connection pads and, on a second face, second connection pads, the first and second connection pads being interconnected through the substrate by internal connection elements;
- production, on the second face of the substrate, in succession of:
• a layer of a material of good magnetic permeability,
• conducting strips constituting row conductors,
• a layer of insulation and
• conducting strips constituting column conductors not parallel to the row conductors;
- drilling of holes through the layer of insulation down to the layer of good magnetic permeability at points of intersection between a row conductor and a column conductor in approximately symmetrical regions of the point of intersection; and
- production of pairs of magnetic poles, the poles of one pair being separated by a gap and being produced approximately in the said regions so as to be coupled to the layer of material having good magnetic permeability.
